# EUROPÄISCHE PATENTSCHRIFT

(11) **EP 0 368 118 B1**
(45) Veröffentlichungstag und Bekanntmachung des Hinweises auf die Patenterteilung: **14.07.1993**
(21) Anmeldenummer: 89120151.9
(22) Anmeldetag: 31.10.1989
(51) Int. Cl.: F25B 17/08, F25D 11/00

(54) **Kühlverfahren für einen Sorptionsapparat**
Cooling method for a sorption apparatus
Procédé de refroidissement pour un appareil à sorption

(30) Priorität: 08.11.1988 DE 3837880
(43) Veröffentlichungstag der Anmeldung: 16.05.1990
(73) Patentinhaber: ZEO-TECH Zeolith Technologie GmbH, D-85716 Unterschleissheim (DE)
(72) Erfinder: Maier-Laxhuber, Peter, Dr., D-8000 München 60 (DE)

(56) Entgegenhaltungen:
- EP-A- 203 558
- DE-A- 3 425 419
- DE-A- 3 521 484
- GB-A- 228 136
- GB-A- 2 178 515
- US-A- 992 558
- US-A- 2 990 693

## Beschreibung

Die Erfindung betrifft ein Kühlverfahren für einen Sorptionsapparat gemäß dem Oberbegriff des Patentanspruchs 1.

Als Sorptionsapparat bezeichnet man eine Apparatur, in der ein flüssiges oder auch ein festes Sorptionsmittel ein zweites, höher siedendes Mittel, das sog. Arbeitsmittel, unter Wärmefreisetzung sorbiert. Bevor das Arbeitsmittel vom Sorptionsmittel sorbiert wird, verdampft es unter Wärmeaufnahme in einem Kühlbehälter. Die Verdampfungstemperaturen liegen dabei je nach Art des Arbeitsmittels bzw. Einsatzgebiet des Sorptionsapparates im Bereich von -40° bis +40°C.

Sorptionsapparate mit festen Sorptionsmitteln, sog. Adsorptionsmittel, arbeiten periodisch, d. h. einer Sorptionsphase folgt immer eine Desorptionsphase, in der das Arbeitsmittel wieder vom Sorptionsmittel getrennt wird. Während der Desorptionsphase kann das Arbeitsmittel nicht verdampfen und somit im Kühlbehälter keine Wärme aufnehmen. Aber auch während der Adsorptionsphasen ist die Verdampfungsleistung im Kühlbehälter nicht konstant, da die Sorptionskraft des Sorptionsmittels von einer Reihe weiterer Faktoren, wie beispielsweise der Sorptionstemperatur und der jeweiligen Konzentration des Arbeitsmittels im Sorptionsmittel abhängt. Um im Kühlbehälter eine konstante Verdampfungsleistung oder eine konstante Verdampfungstemperatur einzuhalten ist deshalb insbesondere bei Adsorptionsapparaten ein zusätzlicher Regelungsaufwand notwendig.

In der US-Patentschrift 2,990,693 wird zur Lösung dieses Problemes zwischen der Kältequelle und dem zu kühlenden Medium ein Kälte-Akkumulator vorgeschlagen. Als Kälte-Akkumulator dient das Gefrieren einer Flüssigkeit, die dann wieder abschmilzt, wenn mehr Kälte abgerufen als produziert wird. Die Erstarrungsschicht wird dabei nicht an der Obertläche der Flüssigkeit gebildet, sondern an den Wärmetauscherflächen der Wärmesenke.

Aus der DE-OS 35 21 484 ist ein Kühlbehälter eines periodisch arbeitenden Adsorptionsapparates bekannt, bei dem während der Adsorptionsphase durch Teilverdampfung des Arbeitsmittels Wasser eine Eisbank aufgebaut wird. Der Kühlbehälter ist Teil des Adsorptionsapparates, der mindestens einen Adsorptionsbehälter und eine Absperreinrichtung zwischen dem Adsorptionsbehälter und dem Kühlbehälter enthält. Das im Kühlbehälter befindliche Wasser gefriert während der Adsorptionsphase zu Eis. Im Kühlbehälter ist ein Wärmetauscher angeordnet, der beispielsweise zur Kühlung von Getränken dient. Das zu kühlende Getränk fließt dabei aus einem Vorratsbehälter kommend durch den Wärmetauscher und gibt Wärme an das im Kühlbehälter befindliche Wasser ab. Zur Regelung der Austrittstemperatur des Getränkes ist eine Regeleinheit vorgesehen, welche durch Öffnen und Schließen der Absperreinrichtung die Verdampfungstemperatur des Wassers regelt. Bei Versagen der Regelung bzw. der Absperreinrichtung gefriert der Wasserinhalt zu Eis, das sich durch den dann einsetzenden Sublimierungsvorgang weit unter 0°C abkühlt. Das im Wärmetauscher stehende Getränk gefriert dabei ein. Eine Fortsetzung des Zapfvorgangs ist damit unterbunden. Die vorgesehene Regeleinheit und die regelbare Absperreinrichtung sind komplizierte und teure Elemente, die einen damit ausgerüsteten Adsorptionsapparat verteuern und von vielen Anwendungsfällen ausschließen.

Aufgabe der vorliegenden Erfindung ist es, bei einem Kühlbehälter der oben bezeichneten Art, eine einfache, preiswerte sowie störungsunanfällige Regelung vorzusehen, die das durch den Wärmetauscher fließende bzw. im Wärmetauscher stehende Medium nicht unter 0°C abkühlt. Gelöst wird diese Aufgabe mittels eines Kühlverfahrens mit den Merkmalen des Patentanspruchs 1.

Die Unteransprüche geben weitere vorteilhafte Verfahren nach dem Erfindungsgedanken wieder.

Für das erfindungsgemäße Verfahren ist der Kühlbehälter so gestaltet bzw. der Wärmetauscher so angeordnet, daß er von der sich nach unten ausbreitenden Eisschicht nicht erreichbar ist. Um dies zu gewährleisten, muß der zu Beginn der Adsorptionsphase über dem Wärmetauscher vorhandene Wasserstand ausreichend bemessen sein.

Da die Adsorptionsmittelfüllmenge im Adsorber festliegt, liegt auch die maximal erzeugbare Eismenge je Adsorptionsphase fest. Sobald die im Kühlbehälter über dem Wärmetauscher befindliche Wassermenge größer ist als die max. erzeugbare Eismenge, kann der Wärmetauscher von der nach unten wachsenden Eisschicht nicht erreicht werden.

Um Eis im Kühlbehälter zu erzeugen, muß ein Teil des eingefüllten Wassers verdampfen. Bei der Verdampfung entsteht Kälte, die das verbleibende Wasser eingefriert. Der Vereisungsvorgang beginnt immer von der Wasseroberfläche aus und pflanzt sich nach unten fort. Um den Vereisungsvorgang nicht zu unterbrechen, muß permanent Wasser an der Grenzschicht Wasser/Eis verdampfen und durch das darüber liegende Eis abgesaugt werden. Bereits eine Eisschicht von wenigen cm erzeugt dabei einen, in bezug auf den Gesamtdruck, erheblichen Druckabfall. Dieser Druckabfall hat zur Folge, daß die Eisschicht mit zunehmender Dicke immer langsamer wächst, bis sie schließlich ganz aufhört zu wachsen. Abhängig von den Geometrien des Sorptionsapparates kann dies bereits nach 5 cm oder aber erst nach 20 cm der Fall sein. Ausschlaggebend hierfür ist beispielsweise die Geometrie des Kühlbehälters, der Wärmezufluß durch die Isolation des Kühlbehälters von außen, der zusätzliche Druckabfall des Wasserdampfes auf seinem Weg zum Adsorptionsmittel oder aber auch die momentane Adsorptionskraft des Adsorptionsmittels. Bei geeignet geformten Kühlbehältern, z. B. einem Kühlbehälter mit einem verengten Querschnitt oberhalb des Wärmetauschers, kann deshalb die Wassermenge oberhalb des Wärmetauschers auf einen kleinen Bruchteil der maximal möglichen Eismenge reduziert werden.

Bei der Adsorption von Wasserdampf im Adsorptionsmittel wird Wärme frei. Diese Wärme muß aus dem Adsorptionsmittel abgeführt werden, damit die Adsorption nicht vorzeitig zum Erliegen kommt. Es ist möglich, diese Wärme geregelt an die Umgebung abzuführen, um die Kälteleistung im Kühlbehälter zu begrenzen. Bekanntlich kann immer nur soviel Kälte im Kühlbehälter erzeugt werden wie Wärme aus dem Adsorber abgeführt wird. Nutzt man diesen Regelungseffekt zusammen mit dem erhöhten Druckabfall durch eine Eisschicht, so gelingt es, einen Adsorptionsapparat zu konstruieren, der mit einer kleinen Wasserfüllung bei einer relativ dünnen Eisschicht das Dickenwachstum einstellt und den Wärmetauscher vor dem Vereisen schützt.

Bedingt durch die Dichteanomalie hat Wasser unter einer Eisschicht immer eine Temperatur von +4°C. Bei einem erfindungsgemäßen Kühlbehälter kann deshalb die im Wärmetauscher stehende, zu kühlende Flüssigkeit nie kälter als +4°C werden. Ein Eingefrieren ist ausgeschlossen. Falls die Flüssigkeit mit einer höheren Temperatur als +4°C in den Wärmetauscher einströmt, gibt sie Wärme an das ihn umgebende Wasser ab. Der Dampfdruck dieser Wasserschicht steigt dadurch bis der Dampfdruck so hoch ist, daß das Wasser verdampft und an der darüberliegenden Eisschicht kondensiert. Dieser Vorgang des Verdampfens und Kondensierens gleicht der Wärmeübertragung in einem überfluteten Verdampfer.

Falls der hydrostatische Druck über der erwärmten Wasserschicht größer ist als der Verdampfungsdruck kommt es zunächst nicht zur Verdampfung, sondern zu einem langsamen Aufstieg der erwärmten Wasserschicht. Dabei nimmt der hydrostatische Druck ab bis der Verdampfungsdruck ausreicht, eine Dampfblase zu bilden. Diese steigt dann durch den enormen Dichteunterschied rasch hoch und kondensiert ebenfalls in der darüberliegenden Eisschicht. Auf diese Weise wird eine sehr effektive Wärmeübertragung vom Wärmetauscher auf die über der Wasserschicht befindliche Eisschicht erzielt, ohne daß der Wärmetauscher unter +4°C abgekühlt werden muß.

Dieser zusätzliche Vorteil einer sehr effektiven Wärmeübertragung von einem Wärmetauscher auf eine Eisschicht kann auch in konventionellen Eisspeicheranlagen genutzt werden, sofern diese unter Vakuum gesetzt werden, damit der Verdampfungs- u.Kondensationsprozeß bei derart tiefen Temperaturen ablaufen kann.

Von gekühlten Getränken erwartet man Zapftemperaturen von +4° bis +8°C. Mit dem erfindungsgemäßen Kühlbehälter ist dieser Zapftemperaturbereich ohne weiteren Regelungsaufwand möglich. Thermostatisch geregelte Ventile oder eine Regelung der Wärmeabgabe aus dem Adsorptionsmittel sind nicht notwendig.

Bei einem Adsorptionsapparat der eingangs beschriebenen Art kann somit während der gesamten Adsorptionszeit die Absperreinrichtung geöffnet bleiben und das Arbeitsmittel permanent adsorbiert werden. Die im Kühlbehälter im Überschuß erzeugte Kälte wird in Form eines Eisblockes gespeichert. Die Adsorptionswärme kann über die gesamte Adsorptionszeit, beispielsweise an die Umgebung, abgeführt werden. Da diese Adsorptionszeit wesentlich länger ist als die eigentliche Zapfzeit (= Summe der Zeiten, in welchen das zu kühlende Getränk durch den Wärmetauscher läuft), kann der Adsorptionsbehälter mit einer kleineren und damit preiswerteren Wärmetauscherfläche ausgestattet werden.

Die maximale Adsorptionskapazität des Adsorptionsmittels hängt von der niedrigsten, zuletzt erreichten Adsorptionstemperatur ab. Je kleiner diese Endtemperatur ist, umso mehr Wasserdampf kann adsorbiert und umso mehr Kälte im Kühlbehälter bereit gestellt werden. Durch den Einsatz des erfindungsgemäßen Kühlbehälters kann zugleich auch der Adsorptionsmittelprozeß vorteilhafter genutzt werden.

In der Zeichnung wird der Gegenstand der Erfindung näher erläutert. Es zeigt:
Fig. 1 einen periodischen Adsorptionsapparat,
Fig. 2 einen Kühlbehälter in geschnittener Darstellung.

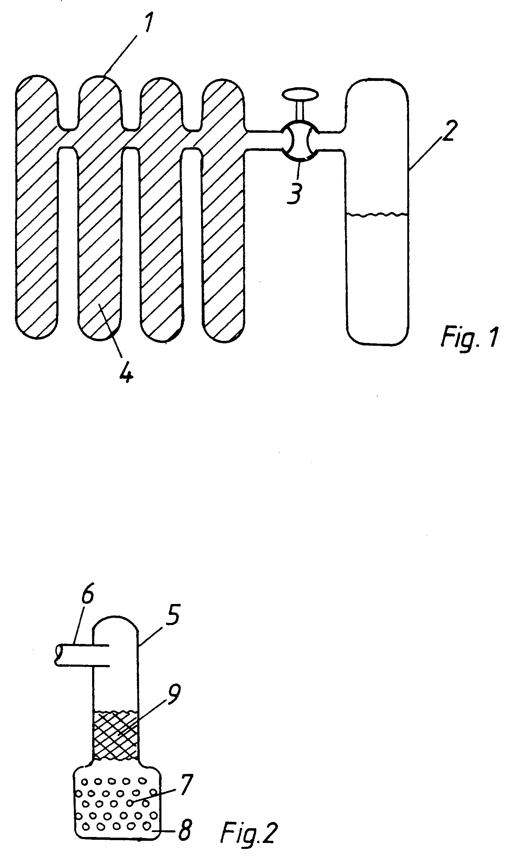

Fig. 1 zeigt einen periodischen Adsorptionskühlapparat, bestehend aus einem Adsorptionsbehälter 1, einem Kühlbehälter 2 und einer Absperreinrichtung 3. Der Adsorptionsbehälter 1 enthält das Adsorptionsmittel 4, der Kühlbehälter 2 enthält Arbeitsmittel.

Während der Desorptionsphase wird das Adsorptionsmittel 4 im Adsorptionsbehälter 1 aufgeheizt. Dabei wird das in diesem voradsorbierte Arbeitsmittel desorbiert. Dieses strömt durch die Absperreinrichtung 3 zum Kühlbehälter 2 und kondensiert dort unter Wärmefreisetzung. Nach der thermischen Trennung von Sorptionsmittel 4 und Arbeitsmittel wird die Absperreinrichtung 3 geschlossen. Das Adsorptionsmittel 4 kann nunmehr auf Umgebungstemperatur abkühlen, ohne daß dampfförmiges Arbeitsmittel vom Kühlbehälter 2 adsorbiert werden kann.

Während der Adsorptionsphase ist die Absperreinrichtung 3 geöffnet. Dampfförmiges Arbeitsmittel kann nunmehr aus dem Kühlbehälter abgesaugt und vom Adsorptionsmittel sorbiert werden. Die dabei im Sorptionsmittel 4 freiwerdende Wärme wird über den Adsorptionsbehälter 1 an die Umgebung abgeführt. Bei der Verdampfung des Arbeitsmittels im Kühlbehälter 2 entsteht Kälte, die je nach Anwendungsfall des Sorptionsapparates auf verschiedene Weise genutzt werden kann.

Fig. 2 zeigt schließlich einen Kühlbehälter 5 in geschnittener Darstellung. Im oberen Teil des Kühlbehälters 5 mündet ein Dampfrohr 6, mit dem der Kühlbehälter an einen nicht gezeichneten Sorptionsbehälter angeschlossen ist. Im unteren Teil des Kühlbehälters 5 befindet sich ein Wärmetauscher 7, der mit Wasser 8 überflutet ist. Über der Wasserschicht 8 befindet sich eine Eisschicht 9, welche den Wärmetauscher 7 nicht erreicht. Fig. 2 zeigt somit den Zustand eines Kühlbehälters mit dem Arbeitsmittel Wasser zum Zeitpunkt der maximalen Eisschichtdikke. Der Querschnitt des Kühlbehälters 2 ist im Bereich der Eisschicht kleiner als im Bereich des Wärmetauschers 7.

## Patentansprüche

1. Verfahren zum Betrieb eines Sorptionsapparates mit einem Kühlbehälter, in dem ein flüssiges Arbeitsmittel mit einem vorgegebenen Füllstand und in diesem versenkt ein Wärmetauscher vorgesehen sind, sowie mit einem Adsorptionsbehälter und einer Verbindung zwischen dem Adsorptionsbehälter und dem Kühlbehälter oberhalb des Füllstands, bei dem während der Adsorptionsphase zumindest ein Teil des Arbeitsmittels erstarrt,
dadurch gekennzeichnet, daß die Adsorption so durchgeführt wird, daß in der Adsorptionsphase das Arbeitsmittel eine von der dem Füllstand entsprechenden Oberfläche aus nach unten zum Wärmetauscher hin wachsende Erstarrungsgrenzschicht bildet, die jedoch den Wärmetauscher nicht erreicht, sodaß das den Wärmetauscher umhüllende flüssige Arbeitsmittel die vom Wärmetauscher aufgenommene Wärme an die Erstarrungsgrenzschicht überträgt.

2. Verfahren zum Betrieb eines Sorptionsapparates nach Anspruch 1, dadurch gekennzeichnet,
daß die Füllmenge des Arbeitsmittels oberhalb des Wärmetauschers (7) kleiner ist als die während der Adsorptionsphase maximal erstarrbare Arbeitsmittelmenge und daß die Dicke der erstarrten Arbeitsmittelmenge (9) ausreicht, den Druckabfall des Arbeitsmitteldampfes, der durch die erstarrte Arbeitsmittelschicht (9) strömt so zu erhöhen, daß ein Weiterwachsen der erstarrten Arbeitsmittelmenge (9) gestoppt wird.

3. Verfahren zum Betrieb eines Sorptionsapparates nach einem der vorausgehenden Ansprüche, dadurch gekennzeichnet,
daß das Arbeitsmittel (8) Wasser ist.

4. Verfahren zum Betrieb eines Sorptionsapparates nach einem der vorausgehenden Ansprüche, dadurch gekennzeichnet,
daß der Dampfdruck des Arbeitsmittels unterhalb der erstarrten Arbeitsmittelmenge (9) durch Zufuhr von Wärme über den Wärmetauscher (7) über den hydrostatischen Druck ansteigt, dadurch Arbeitsmitteldampfblasen entstehen, die durch den Dichteunterschied rasch hochsteigen und an der erstarrten Arbeitsmittelmenge beim Kondensieren des Arbeitsmitteldampfes Wärme an die erstarrte Arbeitsmittelmenge übertragen.

## Claims

1. A method of operating a sorption apparatus comprising a cooling vessel in which are arranged a liquid working medium with a predetermined filing level and a heat exchanger submerged therein, and comprising an adsorption vessel and a connection between the adsorption vessel and the cooling vessel above the filling level, wherein at least a part of the working medium solidifies during the adsorption phase, characterised in that the adsorption is carried out in such manner that in the adsorption phase the working medium forms a solidification boundary layer which propagates downwards from the surface corresponding to the filling level towards the heat exchanger but which does not reach the heat exchanger, so that the liquid working medium surrounding the heat exchanger transfers the heat absorbed from the heat exchanger to the solidification boundary layer.

2. A method of operating a sorption apparatus as claimed in Claim 1, characterised in that the filling quantity of working medium above the heat exchanger (7) is smaller than the maximum quantity of working medium which can solidify during the adsorption phase, and that the thickness of the quantity of solidified working medium (9) is sufficient to increase the drop In pressure of the working medium vapour flowing through the solidified working medium layer (9) to such an extent that a further increase in the quantity of solidified working medium (9) is halted.

3. A method of operating a sorption apparatus as claimed in one of the preceding claims, characterised in that the working medium (8) is water.

4. A method of operating a sorption apparatus as claimed in one of the preceding claims, characterised in that by supplying heat via the heat exchanger (7) the vapour pressure of the working medium below the quantity of solidified working medium (9) rises above the hydrostatic pressure, whereby working medium vapour bubbles are formed which ascend rapidly as a result of the density difference and, in the quantity of solidified working medium, transfer heat to the quantity of solidifed working medium during the condensation of the working medium vapour.

## Revendications

1. Procédé pour faire fonctionner un appareil de sorption comportant un récipient de refroidissement, dans lequel sont prévus un fluide de travail ayant un niveau prescrit et un échangeur de chaleur immergé dans celui-ci, ainsi qu'un récipient d'adsorption et une communication entre le récipient d'adsorption et le récipient de refroidissement au-dessus dudit niveau, dans lequel au moins une partie du fluide de travail se solidifie pendant la phase d'adsorption,
caractérisé en ce qu'il consiste à effectuer l'adsorption de manière que, dans la phase d'adsorption, le fluide de travail forme une couche limite de solidification allant de la surface, correspondant audit niveau, vers le bas vers l'échangeur de chaleur, mais qui n'atteint pas l'échangeur de chaleur, de sorte que le fluide de travail enveloppant l'échangeur de chaleur transmette à la couche limite de solidification de la chaleur absorbée par l'échangeur de chaleur.

2. Procédé pour faire fonctionner un appareil de sorption suivant la revendication 1, caractérisé,
en ce que la quantité du fluide de travail audessus de l'échangeur de chaleur (7) est inférieure à la quantité de fluide de travail maximum qui peut être solidifiée pendant la phase d'adsorption, et en ce que l'épaisseur de la quantité (9) de fluide de travail solidifiée suffit pour augmenter la perte de charge de la vapeur de fluide de travail qui passe à travers la couche (9) solidifiée de fluide de travail, de manière à empêcher la quantité (9) solidifiée de fluide de travail de continuer à croître.

3. Procédé pour faire fonctionner un appareil de sorption suivant l'une des revendications précédentes, caractérisé,
en ce que le fluide de travail (8) est de l'eau.

4. Procédé pour faire fonctionner un appareil de sorption suivant l'une des revendications précédentes, caractérisé,
en ce que la tension de vapeur du fluide de travail, en-dessous de la quantité (9) solidifiée de fluide de travail, est augmentée par apport de chaleur par l'échangeur de chaleur (7) au-dessus de la pression hydrostatique, afin de former des bulles de vapeur de fluide de travail qui, en raison de la différence de masse volumique, s'élèvent rapidement vers le haut et transmettent, lors de la condensation de la vapeur de fluide de travail, de la chaleur à la quantité solidifiée de fluide de travail.
